# FASCICULE DE BREVET EUROPEEN

(11) **EP 4 259 963 B1**
(45) Date de publication et mention de la délivrance du brevet: **11.02.2026**
(21) Numéro de dépôt: 21840085.1
(22) Date de dépôt: 06.12.2021
(51) Int. Cl.: F16N 21/00, F01M 1/08, F01M 11/02, F01D 25/18, F01D 25/16, F02C 7/06, F16C 33/66

(54) **GICLEUR D'HUILE POUR TURBOMACHINE**
ÖLDÜSE FÜR EIN TURBINENTRIEBWERK
OIL JET FOR A TURBINE ENGINE

(30) Priorité: 10.12.2020 FR 2012963
(43) Date de publication de la demande: 18.10.2023
(73) Titulaire: SAFRAN AIRCRAFT ENGINES, 75015 Paris (FR)
(72) Inventeur: PICARD, Mathieu, 77550 MOISSY-CRAMAYEL (FR)
(74) Mandataire: Cabinet Camus Lebkiri
(86) Numéro de dépôt international: PCT/FR2021/052215
(87) Numéro de publication internationale: WO 2022/123160

(56) Documents cités:
- EP-A1- 2 402 622
- EP-A1- 3 693 651
- CN-A- 106 194 433
- US-A- 2 531 411
- US-A1- 2009 218 170

## Description

### DOMAINE TECHNIQUE DE L'INVENTION

La présente invention concerne un gicleur d'huile pour turbomachine et notamment un gicleur d'huile destiné à projeter de l'huile pour lubrifier et/ou refroidir des organes tels que les roulements d'une turbomachine. Elle concerne également une turbomachine équipée d'au moins un tel gicleur d'huile.

L'invention trouve des applications dans le domaine de l'aéronautique et, en particulier, dans le domaine de la lubrification des pièces de moteurs aéronautiques comme les roulements de turbomachines.

### ARRIERE-PLAN TECHNOLOGIQUE DE L'INVENTION

Il est connu, en aéronautique, de projeter de l'huile sur certaines pièces des turbomachines afin de les lubrifier et/ou les refroidir. En particulier, dans une turbomachine, les organes tels que les roulements, les engrenages, les génératrices électriques, etc., sont lubrifiés au moyen d'une huile circulant dans un circuit d'huile et injectée par un gicleur d'huile en direction des organes à lubrifier, dans une enceinte moteur.

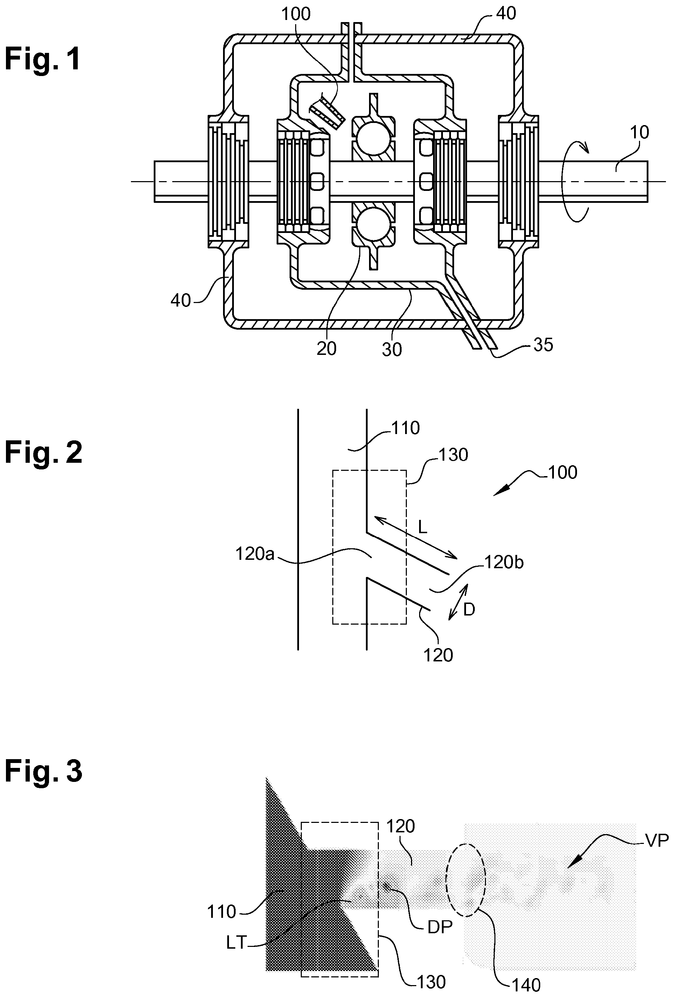

Un exemple d'une enceinte moteur de turbomachine est représenté sur la figure 1. Cette figure 1 montre un arbre moteur 10 autour duquel sont montés des roulements 20 assurant une liaison mécanique entre le rotor et le stator du moteur. Une première enceinte 30 entoure les roulements 20 et assure la circulation de l'huile. Une deuxième enceinte 40 entoure la première enceinte et assure la pressurisation de l'huile au sein de la première enceinte 30. Dans cet exemple, l'huile est projetée vers les roulements 20, au sein de la première enceinte 30, par un gicleur d'huile, représenté schématiquement par la référence 100. L'huile ainsi projetée sur les roulements ruisselle dans la première enceinte 30 et s'évacue par gravité dans le conduit de collecte 35 pour être recyclée et/ou réinjectée dans le circuit d'huile.

Pour être efficace, les organes, par exemple les roulements, doivent être lubrifiés de façon homogène avec une huile répartie le plus uniformément possible sur lesdits organes. Cependant, le comportement du jet d'huile projeté sur les organes à lubrifier du moteur varie en fonction des phases de vol de l'aéronef. En effet, en vol, l'arbre de la turbomachine tourne à des vitesses qui varient suivant la phase de vol. Lorsque la vitesse de rotation de l'arbre est élevée, le mouvement de rotation de l'arbre induit des écoulements d'air qui peuvent avoir un effet sur le comportement du jet d'huile injecté, comme par exemple dévier le jet d'huile. Or, une déviation du jet d'huile entraîne un ciblage moins précis et moins dynamique. Le jet d'huile peut ne pas atteindre l'organe visé ou n'atteindre qu'une partie de l'organe à lubrifier, ce qui a un effet direct sur le fonctionnement du moteur et la durée de vie de l'organe.

Dans le domaine de l'aéronautique, les gicleurs d'huile sont souvent formés d'un conduit ou d'un ensemble de conduits réalisés par perçages d'une pièce brute. Un exemple d'un gicleur d'huile est représenté en coupe sur la figure 2. Dans cet exemple, le gicleur d'huile comporte un conduit principal 110, par exemple une portion d'un circuit d'huile, et un conduit secondaire 120 raccordé sur le conduit principal. Le conduit secondaire 120, d'une longueur L et d'un diamètre D, comporte une première extrémité 120a raccordée au conduit principal et une seconde extrémité 120b ouverte, par laquelle l'huile, sous l'effet de la pression, est projetée vers l'organe à lubrifier.

Le document EP3693651 A1 décrit un autre exemple de gicleur à plusieurs conduits.

Les gicleurs actuels étant fabriqués par perçages multiples, il se crée, dans les zones de raccordement des conduits, des angles saillants formant des arêtes vives entre deux perçages, à l'intersection des conduits. Ces arêtes produisent une instabilité du flux d'huile. Par exemple, dans les zones de raccordement, le flux d'huile peut produire un décollement, ce qui provoque une zone de basse pression pouvant engendrer de la cavitation et/ou déstabiliser le jet d'huile en amplifiant des disparités dans l'écoulement d'huile. L'écoulement d'huile n'est alors plus symétrique, ce qui peut provoquer une atomisation du jet d'huile, c'est-à-dire un éclatement du jet en un spray diffus.

Il est représenté, sur la figure 3, un schéma montrant un exemple de différences de pression au sein d'un gicleur d'huile classique. Dans cet exemple, le flux d'huile circule dans le conduit principal 110 avec une pression P1 puis entre dans le conduit secondaire 120 avec une pression qui évolue au sein dudit conduit secondaire. La pression P1 à l'entrée du conduit secondaire 120, notamment en partie haute de la zone de raccordement 130, évolue vers une pression P2 au voisinage de la partie basse de la zone de raccordement 130. Cette différence de pression entre les différentes portions du conduit secondaire 120 engendre, dans cet exemple, un lâché tourbillonnaire LT (présentant une pression P3) et une zone de dépression DP (présentant une pression P4) dans ledit conduit secondaire. Le flux d'huile dans le conduit secondaire 120 est donc instable et cette instabilité se répercute dans tout le flux d'huile, même après sa sortie dudit conduit secondaire. En effet, le jet d'huile, après la sortie 140 du gicleur 100, comporte des variations de pression VP qui induisent une mauvaise qualité du jet d'huile, comme un éclatement en spray diffus, appelé atomisation. Or, un jet d'huile atomisé est non seulement un jet non-cohérent, donc de mauvaise qualité, mais en plus il est particulièrement sensible aux écoulements d'air et peut donc facilement être dévié, générant un mauvais ciblage des organes à lubrifier.

Il est connu, dans le domaine de l'aéronautique, de tenter de remédier aux problèmes d'instabilité du flux d'huile et d'atomisation dudit jet d'huile en sortie du gicleur, en augmentant le rapport L/D du gicleur d'huile car, plus le rapport L/D est grand, plus le flux d'huile a le temps de se stabiliser avant de sortir du gicleur. Cependant, augmenter le rapport L/D a un impact direct sur le dimensionnement du gicleur qui présente alors un encombrement plus élevé.

Or, de nos jours, l'environnement au sein des turbomachines est de plus en plus contraint, ce qui nécessite de réduire l'encombrement des différentes pièces et organes au sein des turbomachines et, en particulier, l'encombrement des gicleurs. Les solutions proposées jusqu'à aujourd'hui sont donc contraires à l'évolution des turbomachines.

Il existe donc un réel besoin d'un gicleur d'huile permettant la projection d'un jet d'huile stable, c'est-à-dire d'un jet d'huile qui, au moment de sa projection vers les organes à lubrifier, soit exempt de toute dépression et/ou déséquilibre, sans que l'encombrement dudit gicleur ne soit augmenté.

### RESUME DE L'INVENTION

Pour répondre aux problèmes évoqués ci-dessus d'instabilité du jet d'huile en sortie du gicleur, le demandeur propose un gicleur d'huile pour la lubrification d'organes de turbomachine dont la paroi interne de la zone de raccordement est galbée et dépourvue d'angulosités.

Selon un premier aspect, l'invention concerne un gicleur d'huile pour la lubrification d'organes tels que des roulements au sein d'une turbomachine, comprenant :
- un conduit principal d'amenée d'huile,
- au moins un conduit secondaire de sortie d'huile par lequel l'huile est projeté sur l'organe, et
- une zone de raccordement du conduit secondaire sur le conduit principal comportant un angle de jonction entre le conduit principal et le conduit secondaire,
caractérisé en ce que la zone de raccordement comporte une paroi interne en contact avec l'huile, ladite paroi interne étant au moins partiellement galbée à la jonction entre le conduit secondaire et le conduit principal de sorte que l'angle de jonction à l'intérieur de la zone de raccordement soit au moins partiellement arrondi.

Du fait de l'absence d'angulosité à la jonction entre le conduit principal et le conduit secondaire, ce gicleur permet une circulation lisse du flux d'huile, ce qui réduit les risques de phénomènes instationnaires du flux d'huile dans le conduit secondaire et assure un jet d'huile cohérent en sortie du gicleur.

On appelle paroi interne, par opposition à paroi externe, une paroi située en intérieur de conduits et donc en contact avec l'huile circulant dans le gicleur d'huile.

Outre les caractéristiques qui viennent d'être évoquées dans le paragraphe précédent, le gicleur d'huile selon un aspect de l'invention peut présenter une ou plusieurs caractéristiques complémentaires parmi les suivantes, considérées individuellement ou selon toutes les combinaisons techniquement possibles :
- La paroi interne en contact avec l'huile comporte un renflement s'étendant sur au moins une portion de la circonférence de l'angle de jonction entre le conduit secondaire et le conduit principal.
- La paroi interne comporte une forme déterminée en fonction d'un diamètre du conduit secondaire, d'une valeur de l'angle de jonction entre le conduit principal et le conduit secondaire et/ou d'un rapport L/D, où D est le diamètre du conduit secondaire et L est sa longueur.
- L'angle de jonction entre le conduit principal et le conduit secondaire est, suivant la direction d'écoulement de l'huile, un angle obtus.
- La forme galbée de la paroi interne est obtenue par fabrication additive.
- La forme galbée de la paroi interne est obtenue par ajout d'une pièce annulaire fixée à l'intérieur de la zone de raccordement.
- La forme galbée de la paroi interne est obtenue par perçage d'une pièce brute.
- Le conduit secondaire et/ou le conduit principal est réalisé dans un matériau souple apte à s'adapter au flux d'huile circulant dans lesdits conduits, le conduit principal et/ou secondaire en matériau souple étant maintenu par un système d'attache sur une structure de la turbomachine.

Un autre aspect de l'invention concerne une turbomachine, caractérisée en ce qu'elle comporte au moins un gicleur d'huile tel que défini ci-dessus.

### BREVE DESCRIPTION DES FIGURES

D'autres avantages et caractéristiques de l'invention apparaîtront à la lecture de la description qui suit, illustrée par les figures dans lesquelles :
La figure 1, déjà décrite, représente une vue schématique en coupe d'un exemple d'enceinte moteur de turbomachine équipée d'un gicleur d'huile ;
La figure 2, déjà décrite, représente une vue schématique en coupe d'un gicleur d'huile selon l'état de la technique ;
La figure 3, déjà décrite, représente schématiquement une variation de la pression du flux d'huile au sein d'un gicleur selon l'état de la technique et en sortie dudit gicleur ;
La figure 4 représente une vue schématique en coupe d'un exemple de gicleur d'huile selon l'invention ;
La figure 5 représente une vue schématique en coupe d'un autre exemple de gicleur d'huile selon l'invention ; et
La figure 6 représente, selon une schématique en coupe, deux exemples de pièces annulaires destinées à être fixées dans la zone de raccordement d'un gicleur d'huile selon l'invention.

### DESCRIPTION DETAILLEE

Un exemple de réalisation d'un gicleur d'huile, configuré pour limiter l'instabilité du flux d'huile dans le conduit secondaire du gicleur, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

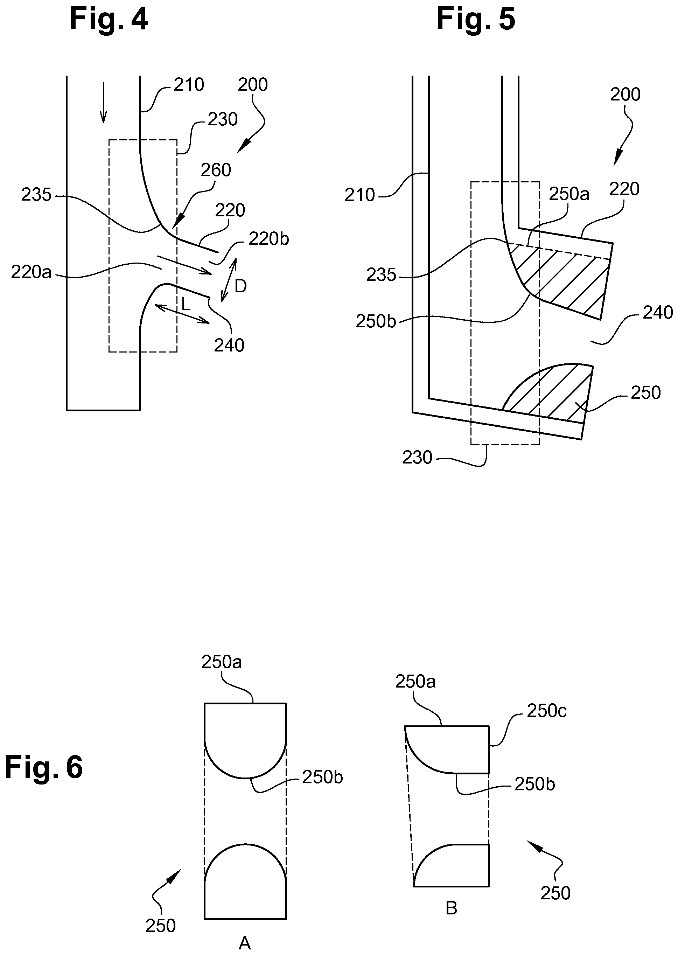

Un exemple d'un gicleur d'huile selon l'invention est représenté sur la figure 4. Ce gicleur d'huile 200 comporte un conduit principal 210, par exemple une portion d'un circuit d'huile, et un conduit secondaire 220 raccordé sur le conduit principal 210 en une région appelée zone de raccordement 230. Les conduits principal 210 et secondaire 220 sont des canalisations destinées à transporter l'huile du circuit d'huile vers la sortie 240 du gicleur 200 d'où elle est projetée vers les organes à lubrifier. Le conduit secondaire 220 comporte une première extrémité 220a raccordée au conduit principal 210 et une seconde extrémité 220b ouverte, par laquelle l'huile, sous l'effet de la pression, est projetée vers l'organe à lubrifier, par exemple un roulement. A la jonction entre le conduit secondaire et le conduit principal, c'est-à-dire à l'embouchure du conduit secondaire, la zone de raccordement 230 comporte un angle, appelé angle de jonction. Cet angle est de préférence, suivant la direction de circulation de l'huile, un angle obtus adapté pour assurer une circulation de l'huile avec une pression choisie.

Le gicleur d'huile selon l'invention comporte, dans la zone de raccordement 230 du conduit secondaire 220 sur le conduit principal 210, une paroi interne 235 galbée, formant un arrondi sur au moins une portion de l'angle de jonction, en intérieur de la zone de raccordement 230. En effet, comme représenté sur la figure 4, la paroi interne 235 présente un galbe d'une forme prédéfinie, adaptée pour limiter ou supprimer les arêtes vives ou saillies anguleuses en intérieur de la zone de raccordement 230, au voisinage de l'angle de jonction.

Selon certains modes de réalisation de l'invention, la paroi interne 235 a une forme galbée s'étendant sur toute la circonférence de l'angle de jonction entre le conduit secondaire 220 et le conduit principal 210 de sorte que la totalité de l'angle de jonction est arrondi. Dans ces modes de réalisation, l'angle de jonction ne comporte plus aucune saillie anguleuse ou arête vive pouvant générer une instabilité du flux d'huile.

Selon d'autres modes de réalisation, la paroi interne 235 a une forme galbée s'étendant sur une partie seulement de la circonférence de l'angle de jonction entre le conduit secondaire 220 et le conduit principal 210. Dans ces modes de réalisation, la partie galbée de l'angle de jonction s'étend sur la partie de l'angle de jonction ayant le plus gros impact sur la pression de l'huile au moment de l'entrée dans le conduit secondaire et donc le plus fort risque de générer des perturbations dans la circulation du flux d'huile. Ainsi, en limitant les saillies anguleuses aux zones de l'angle de jonction les moins sujettes à créer des perturbations, les risques d'instabilité du flux d'huile sont limités.

Selon certains modes de réalisation, le paroi interne 235 comporte un renflement s'étendant sur toute la circonférence de la jonction entre le conduit secondaire et le conduit principal ou sur une partie seulement de cette circonférence. Ce renflement, qui peut être obtenu par divers procédés décrits ultérieurement, a pour effet de recouvrir un angle saillant de sorte que l'huile ne soit plus au contact dudit angle saillant mais du renflement. Ces modes de réalisation présentent l'avantage de permettre la fabrication des conduits principal et secondaire selon la technique classique de perçage, l'ajout du renflement étant une opération réalisée ultérieurement sur des conduits existants.

Dans certains modes de réalisation de l'invention, la paroi externe de la zone de raccordement 230, c'est-à-dire la paroi qui n'est pas en contact avec l'huile, peut également être galbée avec une forme identique ou différente de la forme de la paroi interne 235.

Le fait qu'au moins une partie de l'angle de jonction entre le conduit principal 210 et le conduit secondaire 220 soit arrondi, et donc dépourvu d'arête vive ou de saillie anguleuse, facilite l'écoulement de l'huile au sein du gicleur, ce qui permet d'éviter les décollements et limiter les phénomènes instationnaires du flux d'huile dans le conduit secondaire 220.

Comme tout gicleur, le conduit secondaire 220 du gicleur d'huile 200 comporte une longueur L et un diamètre D. Le détail de la forme galbée de la paroi interne 235, par exemple sa courbure, peut être déterminé en fonction de la valeur de l'angle de jonction, du diamètre D du conduit secondaire 220, du rapport L/D, etc. Par exemple, le rayon de courbure de la paroi interne 235 sera inférieur pour un angle de jonction de 90° que pour un angle de jonction de 120°. Une forme optimale de la paroi interne 235 peut être déterminée par optimisation topologique à l'aide d'outils de simulation, par exemple du type CFD (Computational Fluid Dynamics, en termes anglosaxons), ou par des essais sur un éventail de solutions technologiques. Une forme optimale de la paroi interne 235 peut induire une longueur L minimale du conduit secondaire 220 et, par conséquent, un encombrement latéral minimal du gicleur d'huile.

La forme galbée, ou arrondie, de la paroi interne 235 peut être obtenue par différents procédés de fabrication. Elle peut, par exemple, être obtenue par fabrication additive, en déposant une ou plusieurs couches de matériau par-dessus et/ou autour de l'angle de jonction, à l'intérieur de la zone de raccordement 230. Une telle technique par fabrication additive permet, par exemple, de réaliser un renflement ou une forme particulière de la zone de raccordement.

Selon une autre variante, la forme galbée de la paroi interne 235 peut être obtenue par ajout d'une pièce spécifique à l'intérieur du gicleur, dans la zone de raccordement 230. Un exemple d'un gicleur 200 équipé d'une telle pièce spécifique 250 est représenté schématiquement sur la figure 5. Cette pièce spécifique 250 peut être une pièce annulaire, ou canal, logée dans le conduit secondaire 220, à l'intersection avec le conduit principal 210, à l'endroit de l'angle de jonction. Cette pièce annulaire 250 peut se présenter, comme dans l'exemple A de la figure 6, sous la forme d'une couronne comportant une face externe 250a plane, prévue pour être en contact avec la face interne 220b du conduit secondaire 220 et une face interne 250b bombée, prévue pour être en contact avec le flux d'huile. Alternativement, la pièce annulaire 250 peut se présenter, comme dans l'exemple B de la figure 6, sous la forme d'une demi-couronne comportant une face externe 250a plane, prévue pour être en contact avec la face interne 220b du conduit secondaire 220, une face interne 250b bombée, prévue pour être en contact avec le flux d'huile, et une face transversale 250c plane formant la face de sortie du gicleur. Cette pièce annulaire peut être fixée en intérieur de la zone de raccordement 230 par tout moyen de fixation connu dans le domaine, comme par exemple par soudage, brasage ou vissage.

Selon un mode de réalisation de l'invention, le conduit secondaire 220 et/ou le conduit principal 210 est réalisé dans un matériau souple apte à s'adapter au flux d'huile circulant dans lesdits conduits et présentant une bonne tenue à la chaleur. Le matériau souple présente l'avantage de présenter une jonction galbée, sans aucune angulosité. Dans ce mode de réalisation, le ou les conduit(s) en matériau souple est maintenu par un système d'attache monté sur une structure environnante, comme par exemple un carter de l'enceinte moteur.

Quel que soit le mode de réalisation du gicleur selon l'invention, plus l'écoulement de l'huile aux endroits des changements de direction, c'est-à-dire dans la zone de raccordement 230, est lisse, sans aspérité ou angulosité, et plus les risques de décollements et de perturbations sont réduits, ce qui assure un écoulement stable du flux d'huile dans le conduit secondaire 220 et donc un jet cohérent en sortie 240 du gicleur. En conséquence, les phénomènes d'atomisation et/ou de mauvais ciblage sont très nettement diminués, voire supprimés. Le conduit secondaire 220 du gicleur d'huile selon l'invention peut donc présenter une longueur L plus courte que dans les gicleurs classiques puisqu'il n'est plus besoin de cette longueur pour stabiliser le flux d'huile avant sa sortie du gicleur.

Bien que décrit à travers un certain nombre d'exemples, variantes et modes de réalisation, le gicleur d'huile selon l'invention comprend divers variantes, modifications et perfectionnements qui apparaîtront de façon évidente à l'homme du métier, étant entendu que ces variantes, modifications et perfectionnements font partie de la portée de l'invention définie par les revendications.

## Revendications

1. Gicleur d'huile (200) pour la lubrification d'organes tels que des roulements au sein d'une turbomachine, comprenant :
- un conduit principal (210) d'amenée d'huile,
- au moins un conduit secondaire (220) de sortie d'huile par lequel l'huile est projeté sur l'organe, et
- une zone de raccordement (230) du conduit secondaire sur le conduit principal comportant un angle de jonction (260) entre le conduit principal et le conduit secondaire,
**caractérisé en ce que** la zone de raccordement (230) comporte une paroi interne (235) en contact avec l'huile, ladite paroi interne (235) étant au moins partiellement galbée à la jonction entre le conduit secondaire et le conduit principal de sorte que l'angle de jonction (260) à l'intérieur de la zone de raccordement soit au moins partiellement arrondi, ladite paroi interne (235) comportant un renflement (250) s'étendant sur au moins une portion de la circonférence de l'angle de jonction entre le conduit secondaire (220) et le conduit principal (210).

2. Gicleur d'huile selon la revendication 1, **caractérisé en ce que** la paroi interne (235) comporte une forme galbée dont les caractéristiques sont déterminées en fonction d'un diamètre du conduit secondaire (220), d'une valeur de l'angle de jonction (260) entre le conduit principal et le conduit secondaire et/ou d'un rapport L/D, où D est le diamètre du conduit secondaire et L est sa longueur.

3. Gicleur d'huile selon l'une quelconque des revendications 1 à 2, **caractérisé en ce que** l'angle de jonction (260) entre le conduit principal (210) et le conduit secondaire (220) est, suivant la direction d'écoulement de l'huile, un angle obtus.

4. Gicleur d'huile selon l'une quelconque des revendications 1 à 3, **caractérisé en ce qu'**une forme galbée de la paroi interne (235) est obtenue par fabrication additive.

5. Gicleur d'huile selon l'une quelconque des revendications 1 à 3, **caractérisé en ce qu'**une forme galbée de la paroi interne (235) est obtenue par ajout d'une pièce annulaire fixée à l'intérieur de la zone de raccordement.

6. Gicleur d'huile selon l'une quelconque des revendications 1 à 3, **caractérisé en ce qu'**une forme galbée de la paroi interne (235) est obtenue par perçage d'une pièce brute.

7. Turbomachine, **caractérisée en ce qu'**elle comporte au moins un gicleur d'huile (200) selon l'une quelconque des revendications 1 à 6.

## Patentansprüche

1. Ölspritzdüse (200) zur Schmierung von Bauteilen wie Lagern in einer Turbomaschine, umfassend:
- eine Hauptleitung (210) zur Ölzufuhr,
- mindestens eine Nebenleitung (220) für den Ölauslauf, durch die das Öl auf das Bauteil gesprüht wird, und
- einen Anschlussbereich (230) der Nebenleitung an die Hauptleitung mit einem Verbindungswinkel (260) zwischen der Hauptleitung und der Nebenleitung,
**dadurch gekennzeichnet, dass** der Anschlussbereich (230) eine Innenwand (235) aufweist, die mit dem Öl in Kontakt steht, wobei die Innenwand (235) an der Verbindungsstelle zwischen der Nebenleitung und der Hauptleitung zumindest teilweise gewölbt ist, sodass der Verbindungswinkel (260) innerhalb des Anschlussbereichs zumindest teilweise abgerundet ist, wobei die Innenwand (235) eine Ausbuchtung (250) aufweist, die sich über zumindest einen Teil des Umfangs des Verbindungswinkels zwischen der Nebenleitung (220) und der Hauptleitung (210) erstreckt.

2. Ölspritzdüse nach Anspruch 1, **dadurch gekennzeichnet, dass** die Innenwand (235) eine gewölbte Form aufweist, deren Merkmale in Abhängigkeit von einem Durchmesser der Nebenleitung (220) bestimmt werden, um einen Wert des Verbindungswinkels (260) zwischen der Hauptleitung und der Nebenleitung und/oder einem Verhältnis L/D bestimmt werden, wobei D der Durchmesser der Nebenleitung und L deren Länge ist.

3. Ölspritzdüse nach einem der Ansprüche 1 bis 2, **dadurch gekennzeichnet, dass** der Verbindungswinkel (260) zwischen der Hauptleitung (210) und der Nebenleitung (220) in Strömungsrichtung des Öls ein stumpfer Winkel ist.

4. Ölspritzdüse nach einem der Ansprüche 1 bis 3, **dadurch gekennzeichnet, dass** eine gewölbte Form der Innenwand (235) durch additive Fertigung erzielt wird.

5. Ölspritzdüse nach einem der Ansprüche 1 bis 3, **dadurch gekennzeichnet, dass** eine gewölbte Form der Innenwand (235) durch Hinzufügen eines ringförmigen Teils erzielt wird, das innerhalb des Anschlussbereichs befestigt ist.

6. Ölspritzdüse nach einem der Ansprüche 1 bis 3, **dadurch gekennzeichnet, dass** eine gewölbte Form der Innenwand (235) durch Bohren eines Rohteils erzielt wird.

7. Turbomaschine, **dadurch gekennzeichnet, dass** sie mindestens eine Ölspritzdüse (200) gemäß einem der Ansprüche 1 bis 6 umfasst.

## Claims

1. An oil nozzle (200) for lubricating members such as bearings within a turbomachine, comprising:
- a main oil supply duct (210),
- at least one secondary oil outlet duct (220) through which oil is sprayed onto the member, and
- a connection zone (230) for connecting the secondary duct to the main duct, including a junction angle (260) between the main duct and the secondary duct,
**characterised in that** the connection zone (230) includes an inner wall (235) in contact with oil, said inner wall (235) being at least partially curved at the junction between the secondary duct and the main duct so that the junction angle (260) inside the connection zone is at least partially rounded, said inner wall (235) including a bulge (250) extending over at least one portion of the circumference of the junction angle between the secondary duct (220) and the main duct (210).

2. The oil nozzle according to claim 1, **characterised in that** the inner wall (235) includes a curved shape whose characteristics are determined based on a diameter of the secondary duct (220), a value of the junction angle (260) between the main duct and the secondary duct and/or a ratio L/D, where D is the diameter of the secondary duct and L is its length.

3. The oil nozzle according to any of claims 1 to 2, **characterised in that** the junction angle (260) between the main duct (210) and the secondary duct (220) is, along the oil flow direction, an obtuse angle.

4. The oil nozzle according to any of claims 1 to 3, **characterised in that** a curved shape of the inner wall (235) is obtained by additive manufacturing.

5. The oil nozzle according to any of claims 1 to 3, **characterised in that** a curved shape of the inner wall (235) is obtained by adding an annular part attached inside the connection zone.

6. The oil nozzle according to any of claims 1 to 3, **characterised in that** a curved shape of the inner wall (235) is obtained by drilling a blank.

7. A turbomachine, **characterised in that** it includes at least one oil nozzle (200) according to any of claims 1 to 6.
